# EUROPÄISCHE PATENTANMELDUNG

(11) **EP 4 586 211 A1**
(43) Veröffentlichungstag der Anmeldung: **16.07.2025**
(21) Anmeldenummer: 24151609.5
(22) Anmeldetag: 12.01.2024
(51) Int. Cl.: G06V 10/764, G06V 10/774, G06V 20/56, G06V 10/80

(54) **VERFAHREN ZUR GENERIERUNG EINES GELABELTEN DATENSATZES FÜR EIN UMFELDMODELL**

(71) Anmelder: VOLKSWAGEN AG, 38440 Wolfsburg (DE)
(72) Erfinder: Spiegelberg, Jakob, 38122 Braunschweig (DE); Kempkes, Marie, 38259 Salzgitter (DE)

(57) **Zusammenfassung**

Die vorliegende Erfindung betrifft ein Verfahren zur Generierung eines gelabelten Datensatzes für ein Umfeldmodell. Hierbei werden Umfelddaten durch mehrere Fahrzeuge (F₁, F₂, F_{X}) einer Fahrzeugflotte erfasst (11), wobei die Umfelddaten (UD₁, UD₂, UDₓ) durch Sensoren (K₁, K₂, Kx) der jeweiligen Fahrzeuge erfasst werden und Umfeldobjekte und/oder Umfeldparameter im Fahrzeugumfeld der jeweiligen Fahrzeuge betreffen. Es werden Labelvektoren (LV₁, LV₂, LVₓ) zu Datenpunkten in den jeweils erfassten Umfelddaten (UD₁, UD ₂, UDₓ) erzeugt (12), wobei ein Labelvektor für eine Klassifikation der Datenpunkte in n verschiedene Klassen einen Satz von 2^n möglichen Elementen aufweist, die sich aus den möglichen Kombinationen der Klassen ergeben, und wobei ein erfasster Datenpunkt mit einem Unsicherheitsmaß versehen wird, indem einem oder mehreren der möglichen Elemente Werte für Wahrscheinlichkeitsmassen zugeordnet werden. Die Labelvektoren (LV₁, LV ₂, LVₓ) werden zu einem aggregierten Labelvektor für einen Datenpunkt durch Linearkombination der übermittelten Labelvektoren zusammengeführt (14). Der aggregierte Labelvektor oder eine von dem aggregierten Labelvektor abgeleitete Information wird zusammen mit dem zugehörigen Datenpunkt in einer Datenbank (DB) gespeichert (15).

## Beschreibung

Die vorliegende Erfindung betrifft ein Verfahren zur Generierung eines gelabelten Datensatzes für ein Umfeldmodell, welches beispielsweise dazu verwendet werden kann, einen Datensatz von Umfeldwahrnehmungsdaten für autonom fahrende Fahrzeuge aufzubauen.

Beim Maschinellen Lernen (ML) wird mittels geeigneter selbstadaptiver Algorithmen und basierend auf Trainingsdaten ein statistisches Modell aufgebaut, mit dem Muster und Gesetzmäßigkeiten erkannt werden können und Vorhersagen für zukünftige Daten oder Entscheidungen basierend auf erfassten Daten getroffen werden können. Aufgrund der Komplexität sind Maschinenlern-Modelle üblicherweise als künstliche neuronale Netzwerke, beispielsweise im Bereich der Objektdetektion als sogenannte "Deep Neural Networks" ausgestaltet, und werden aus diesem Grund häufig auch als Systeme mit künstlicher Intelligenz (KI) bezeichnet. Solche tiefen neuronalen Netze können eine Vielzahl von Zwischenschichten (englisch hidden layers) zwischen Eingabeschicht und Ausgabeschicht und dadurch eine umfangreiche Komplexität mit einer sehr großen Zahl von Parametern und Rechenoperationen aufweisen und benötigen in der Lernphase eine große Menge an Trainingsdaten.

Ein Anwendungsgebiet des Maschinellen Lernens, dem immer mehr Bedeutung zukommt, ist der Einsatz in Fahrzeugen, beispielsweise für Fahrerassistenzsysteme beim teilautomatisierten Fahren oder für Sicherheitssysteme beim vollautomatisierten oder autonomen Fahren. So kann mit Fahrzeugsensoren das Umfeld des Fahrzeugs erfasst werden und basierend auf den erfassten Sensordaten mit einem geeigneten Maschinenlern-Modell ein Umfeldmodell erstellt werden. Hierfür können Wahrnehmungsmodule vorgesehen sein, welche erlernte Objekte im Umfeld erkennen können und Informationen hierüber an ein Planungsmodul weiterleiten. Auf diese Weise kann beispielsweise die Detektion und Klassifizierung diverser Objekte in mit Fahrzeugkameras erfassten Kamerabildern, wie beispielsweise von Fahrzeugen und Fußgängern, mit lernbasierten Verfahren realisiert werden. Das Planungsmodul kann dann für eine Trajektorienplanung und sichere Steuerung des Fahrzeugs die erkannten Objekte berücksichtigen. Sowohl das Wahrnehmungsmodul als auch das Planungsmodul können hierbei auf einem Maschinenlern-Modell basieren.

Eine Herausforderung bei der Entwicklung und dem Testen von solchen Systemen für Fahrerassistenzsysteme und autonom fahrende Fahrzeuge, aber auch für viele weitere Anwendungen des maschinellen Lernens in sicherheitskritischen Bereichen, ist deren Absicherung. Neben der Robustheit der ML-Module und möglicher Sicherheitsvorkehrungen für diese ML-Module ist ein Maß der Unsicherheit der Schätzung des jeweiligen ML-Moduls dabei ein wichtiger Baustein. Die Ermittlung verlässlicher Unsicherheitsmaße mit den beim autonomen Fahren relevanten tiefen Latenz-Zeiten ist dabei nicht einfach zu erreichen und erfordert häufig den Einsatz komplexer oder zusätzlicher ML-Algorithmen.

Dieses ist u.a. darauf zurückzuführen, dass während des Trainings nur deterministische Label zur Verfügung stehen, welche aus einer unbekannten Datenverteilung gesampelt werden. Nur über die Statistik vieler ähnlicher Datenpunkte kann dann die Unsicherheit der Datenpunkte erlernt werden. Es ergeben sich somit Abhängigkeiten von Hyperparametern des Trainings und der Zahl der Datenpunkte, welche in der Praxis zu schlechten intrinsischen Unsicherheitsmaßen führen.

Die US 2022/0101023 A1 beschreibt ein Wahrnehmungssystem zur Trajektorienplanung, bei dem Fahrspuren einer Straße modelliert werden. Hierbei erfolgt eine Schätzung der Glaubwürdigkeit und Plausibilität von Fahrbahnabschnitten der Fahrspuren und basierend darauf eine Quantifizierung der in dem Straßenmodell enthaltene Unsicherheit.

In der WO 2022/243337 A2 wird ebenfalls ein Wahrnehmungssystem offenbart. Für ein mit einer Kamera erfasstes Eingangsbild wird mit einem neuronalen Netzwerk eine Segmentkarte und mit einem Unsicherheitsdetektor eine Unsicherheitskarte erzeugt. Jedes Element der Unsicherheitskarte spiegelt hierbei einen Unsicherheitswert für eine Klassenvorhersage für ein entsprechendes Element in der Segmentkarte wider.

Die US 2023/0031825 A1 offenbart ein Verfahren zum Zusammenführen von Sensordaten. Dabei werden erste Sensordaten analysiert und basierend darauf wird ein erstes Sensorergebnis und ein erstes Sensormodell erzeugt, wobei verschiedenen Teilen des ersten Sensorergebnisses eine unterschiedliche Unsicherheit zugeordnet werden kann. Es wird auch ein zweites Sensorergebnis und ein zweites Sensormodell erzeugt. Das erste Sensorergebnis und das zweite Sensorergebnis werden in Abhängigkeit vom ersten Sensormodell und vom zweiten Sensormodell zusammengeführt.

Es ist eine Aufgabe der Erfindung, ein Verfahren zur Generierung eines gelabelten Datensatzes für ein Umfeldmodell zur Verfügung zu stellen, welches ein Maß der Unsicherheit für die entsprechenden Label bereitzustellt.

Diese Aufgabe wird durch die unabhängigen Ansprüche gelöst. Bevorzugte Ausgestaltungen der Erfindung sind Gegenstand der abhängigen Ansprüche.

Das erfindungsgemäße Verfahren zur Generierung eines gelabelten Datensatzes für ein Umfeldmodell, bei dem die folgenden Schritte ausgeführt werden:
- Erfassen von Umfelddaten durch mehrere Fahrzeuge (F) einer Fahrzeugflotte, wobei die Umfelddaten durch Sensoren der jeweiligen Fahrzeuge erfasst werden und Umfeldobjekte und/oder Umfeldparameter im Fahrzeugumfeld der jeweiligen Fahrzeuge betreffen;
- Erzeugen von Labelvektoren zu Datenpunkten in den jeweils erfassten Umfelddaten, wobei ein Labelvektor für eine Klassifikation der Datenpunkte in n verschiedene Klassen einen Satz von 2^n möglichen Elementen aufweist, die sich aus den möglichen Kombinationen der Klassen ergeben, und wobei ein erfasster Datenpunkt mit einem Unsicherheitsmaß versehen wird, indem einem oder mehreren der möglichen Elemente Werte für Wahrscheinlichkeitsmassen zugeordnet werden;
- Zusammenführen der Labelvektoren zu einem aggregierten Labelvektor für einen Datenpunkt durch Linearkombination der übermittelten Labelvektoren; und
- Speichern des aggregierten Labelvektors oder einer von dem aggregierten Labelvektor abgeleiteten Information zusammen mit dem zugehörigen Datenpunkt in einer Datenbank.

Auf diese Weise wird ein gelabelter Datensatz generiert, wobei Informationen über die Verteilung der Wahrscheinlichkeiten möglicher Klassen genutzt werden, um durch die Label die Unsicherheit der Datenpunkte widerzuspiegeln. Dadurch ist ein direktes Training der Unsicherheit einer Vorhersage möglich. Es kann damit auf andere Maßnahmen zum Erhalten von Unsicherheitsmaßen, welche in der Regel zusätzlichen Rechenaufwand verursachen, verzichtet werden.

Hierbei kann das Umfeldmodell für eine Abbildung der Fahrzeugumgebung durch ein Wahrnehmungsmodul eines autonomen Fahrsystems verwendet werden, wobei das Wahrnehmungsmodul auf einem Maschinenlernmodell basiert und wobei das Maschinenlernmodell mittels des in der Datenbank gespeicherten gelabelten Datensatzes trainiert wird.

Vorteilhafterweise wird bei der Erfassung der Umfelddaten auch eine Zeit- und/oder Positionsangabe zu den jeweils erfassten Datenpunkten bestimmt.

Gemäß einer Ausführungsform der Erfindung werden die einzelnen Labelvektoren zu den jeweils erfassten Datenpunkten in dem jeweiligen Fahrzeug erzeugt und die erfassten Datenpunkte, die erzeugten Labelvektoren für die erfassten Datenpunkte sowie die zugeordneten Zeit- und/oder Positionsangaben an einen Datenaggregator übermittelt.

Gemäß einer weiteren Ausführungsform der Erfindung werden die erfassten Datenpunkte sowie die zugeordneten Zeit- und/oder Positionsangaben an einen Datenaggregator übermittelt und dort die einzelnen Labelvektoren zu den jeweils erfassten Datenpunkten erzeugt.

Besonders vorteilhaft kann das erfindungsgemäße Verfahren eingesetzt werden, wenn der Datenaggregator in einem Backendserver verortet ist.

Dabei erfolgt vorteilhafterweise für den Fall, dass zur Beschreibung der Umfelddaten für gleiche Merkmale und/oder Eigenschaften unterschiedliche Klassen verwendet worden sind, eine Zusammenfassung dieser Klassen.

Gemäß einer Ausführungsform der Erfindung wird der aggregierte Labelvektor in der Datenbank als 2^n dimensionaler Massevektor gespeichert.

Gemäß einer weiteren Ausführungsform der Erfindung werden aus den Wahrscheinlichkeitsmassen des aggregierten Labelvektors für die n Elemente mit nur einer Klasse n Plausibilitätswerte und n Glaubenswerte ermittelt und dann als jeweils n-dimensionale Vektoren in der Datenbank gespeichert.

Vorteilhafterweise erfolgt für eine Kontrolle der Unter- und/oder Obergrenzen der Wahrscheinlichkeiten einzelner Klassen ein Vergleich mit einem Schwellwert für die Plausibilitätswerte und/oder einem Schwellwert für die Glaubenswerte.

Ebenso können vorteilhafterweise bei dem Zusammenführen der übermittelten Labelvektoren zu einem aggregierten Labelvektor die einzelnen Labelvektoren unterschiedlich gewichtet werden.

Hierbei kann die Gewichtung der einzelnen Labelvektoren insbesondere basierend auf den übermittelten Zeit- und/oder Positionsangaben erfolgen.

Dabei können die einzelnen Labelvektoren vorteilhafterweise mit zunehmendem zeitlichen und/oder räumlichen Abstand geringer gewichtet werden.

Dabei können vorteilhafterweise in Abhängigkeit von den erfassten Umfeldobjekten und/oder Umfeldparametern unterschiedliche Gewichtungsfunktionen vorgegeben werden.

Schließlich kann es von Vorteil sein, dass bei dem Zusammenführen der übermittelten Labelvektoren zu einem aggregierten Labelvektor zeitlich naheliegende Labelvektoren zwingend mit einbezogen werden.

Ferner umfasst die Erfindung ein System, das eingerichtet ist, ein erfindungsgemäßes Verfahren auszuführen sowie Vorrichtungen zur Ausführung des erfindungsgemäßen Verfahrens.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm für ein erfindungsgemäßes Verfahren; und
- Fig. 2: zeigt schematisch ein Beispiel mit Fahrzeugen einer Fahrzeugflotte, die zur Generierung eines gelabelten Datensatzes Umfelddaten an einen Server melden.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

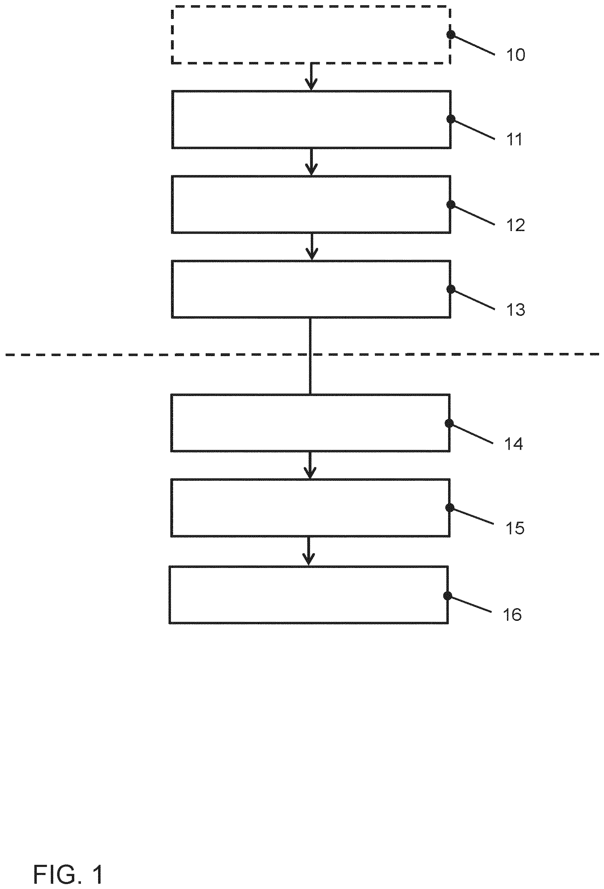

Ein Ablaufdiagramm eines erfindungsgemäßen Verfahrens wird in Figur 1 gezeigt. Das Verfahren wird am Beispiel von Umfeldwahrnehmungsdaten für autonome Fahrzeuge erläutert. Hierbei soll ein Datensatz von Umfeldwahrnehmungsdaten für ein autonomes Fahrsystem solcher autonom fahrenden Fahrzeuge aufgebaut werden, beispielsweise für eine Objekterkennung oder eine semantische Segmentierung. Hierbei sind n verschiedene Label oder "Klassen" vorgesehen, wobei die Label aus den Rückmeldungen mehrerer Labeling-Einheiten-geformt werden und die Unsicherheit der jeweiligen Label berücksichtigt wird. Die Erfindung ist aber nicht auf Anwendungen im Rahmen eines autonomen Fahrsystems beschränkt.

In einem optionalen Verfahrensschritt 10 kann zunächst an Fahrzeuge einer Fahrzeugflotte eine Anfrage gesandt werden, in der beispielsweise ein geografischer Bereich definiert wird, in welchem die Fahrzeuge ihr jeweiliges Umfeld mit ihrer Umfeldsensorik zur Generierung von Datenlabel erfassen sollen. Hierbei kann auch vorgesehen werden, bestimmte Zeitbereiche oder andere Randbedingungen für Umfeldparameter zu definieren, beispielsweise um Umfeldobjekte zu einer bestimmten Tageszeit oder unter bestimmten Beleuchtungs- oder Wetterbedingungen zu erfassen. Auch kann vorgesehen werden, von der Fahrzeugflotte nur solche Fahrzeuge zur Erfassung des Umfelds zu kontaktieren, für die bekannt ist, dass sie hierfür eine besonders geeignete Umfeldsensorik aufweisen. Ferner kann es auch vorgesehen werden, die Fahrzeuge anzuweisen, Umfelddaten für eine bestimmte Auswahl von Umfeldobjekten zu erfassen.

In Verfahrensschritt 11 werden dann von mehreren Fahrzeugen der Fahrzeugflotte einer oder mehrere Datenpunkte für die Umfelddaten erfasst. Hierbei kann es sich insbesondere um mit mindestens einem im Fahrzeug integrierten Fahrzeugsensor erfasste Daten handeln. Dieses können insbesondere Bild- oder Videodaten des Fahrzeugumfelds sein, die von einer oder mehreren Außenkameras des Fahrzeugs erfasst werden. Stattdessen oder zusätzlich kann das Fahrzeugumfeld aber auch mit anderen Sensoren erfasst werden, zum Beispiel mit einem Radarsensor, einem LIDAR-Sensor oder einem Ultraschallsensor. Es kann sich aber auch um andere im Fahrzeug vorliegende Daten handeln. Bei der Erfassung der Umfelddaten werden hierbei auch weitere Angaben zu der Erfassung ermittelt. Hierbei kann insbesondere der Zeitpunkt der Erfassung und der Ort der Erfassung ermittelt und beispielsweise als Zeit- und Ortstempel den Datenpunkten hinzugefügt werden. Es ist auch möglich, anstatt der Zeit- und Positionsangaben nur eine dieser Angaben zu verwenden.

Es kann insbesondere vorgesehen werden, dass die mehreren Fahrzeuge gemäß einer empfangenen Anfrage Datenpunkte erfassen, die zeitlich und/oder räumlich nahe beieinander liegen und die gleiche Information für Umfeldobjekte bzw. Umfeldparameter im Fahrzeugumfeld der jeweiligen Fahrzeuge betreffen. So kann beispielsweise von mehreren Fahrzeugen, die nacheinander die gleiche Kreuzung passieren, jeweils mit wenigen Sekunden Verzögerung ein Bild der Kreuzung aufgenommen werden. Der räumliche und zeitliche Abstand, der akzeptiert werden kann, kann dabei je nach erfassten Umfeldobjekten bzw. Umfeldparametern variiert werden. So müssen beispielsweise Verkehrssituationen aufgrund ihrer kurzfristigen Veränderungen mit geringem Abstand erfasst werden, während für Wetterinformationen auch eine Erfassung mit größeren Abständen akzeptabel sein kann.

Es kann aber auch vorgesehen werden, dass das Umfeld von den Fahrzeugen der Fahrzeugflotte ständig erfasst wird und dann bei der später erfolgenden Aggregierung der Labelvektoren für die erfassten Datenpunkte eine Selektion basierend auf den Zeit- und/oder Ortstempeln erfolgt.

In Verfahrensschritt 12 werden dann zu Datenpunkten in den jeweils erfassten Umfelddaten Labelvektoren erzeugt. Bei einem Fokus auf eine Umfeldklassifikation, die insbesondere für die Generierung semantischer Informationen oder eine Objekterkennung genutzt werden kann, wird hierbei für eine Klassifikation in n verschiedene Klassen ein Labelvektor erstellt, wobei dieser einen Satz von 2^n möglichen Elementen aufweist, die sich aus den möglichen Kombinationen der Klassen ergeben, und wobei ein erfasster Datenpunkt mit einem Unsicherheitsmaß versehen wird. Hierbei erfolgt eine Unsicherheitsschätzung in Anlehnung an die Dempster-Shafer Theorie (DST), welche auch als mathematische Theorie der Evidenz bezeichnet wird, es sind aber ebenso auch andere Umsetzungsformen denkbar.

Gemäß der Dempster-Shafer Theorie werden die 2^n Ausgabewerte als sogenannte Massen interpretiert. Die Dempster-Shafer Theorie kann als Verallgemeinerung der klassischen Wahrscheinlichkeitstheorie gedeutet werden und verwendet nicht unmittelbar Wahrscheinlichkeiten, sondern beschreibt Wahrscheinlichkeitsvolumen, welche die klassische Bayes'sche Wahrscheinlichkeit umschließt. Die Größe des jeweiligen Wahrscheinlichkeitsvolumen spiegelt dabei die Unsicherheit der Wahrscheinlichkeit wider, beschrieben durch Ober- und Untergrenzen aller möglicher Klassen (im Fall einer Klassifikation). Damit kann die Dempster-Shafer Theorie zur Verarbeitung von unsicherem Wissen und darauf beruhenden Entscheidungsfindungen genutzt werden.

Grundlegend für die Dempster-Shafer Theorie sind hierbei drei Funktionen, die sogenannte Massefunktion (engl.: mass function (m)), die Glaubensfunktion (engl.: belief function (bei)) und die Plausibilitätsfunktion (engl.: plausibility function (pl)). Die sich aus der Plausibilitätsfunktion ergebende Plausibilität (plausibility) wird dabei als Möglichkeit für das Vorliegen einer Klasse aufgefasst. Kann beispielsweise ein Label A ausgeschlossen werden, hat es eine geringe Plausibilität, muss Label A auch berücksichtigen werden, so hat es eine hohe Plausibilität.)"). Der sich aus der Glaubensfunktion ergebende Glaube (Belief), den man in eine Aussage hat, ist das Gegenstück hierzu, also ein Maß dafür, wie sehr darauf vertraut werden kann, dass ein bestimmtes Label vorliegt.

Beide Angaben werden aus der Masse gebildet, die gewisse Ähnlichkeit mit einer Wahrscheinlichkeit hat, aber auf dem sogenannten Frame of Discernment definiert ist. Unter dem Frame of Discernment wird hierbei eine Menge sich gegenseitig ausschließender Elemente oder in anderen Worten der Raum der möglichen Annahmen, über die sich die Masse verteilt, verstanden. Für den Fall einer Klassifikation in n Klassen ist es das 2**n dimensionale sogenannte Powerset aus allen Kombinationen möglicher Label, wobei jedes Set jeweils die Interpretation hat, dass es jedes der enthaltenen Label sein kann bzw. keine Unterscheidung möglich ist. Für das Beispiel n=3 und die Label A, B und C ergibt sich beispielsweise: {{A}, {B}, {C}, [A,B}, {A,C}, {B,C}, {A,B,C}, leeres Set}. Um aus der Masse Glaube (Belief) und Plausibilität (plausibility) zu erhalten, werden für den Fall einer Klassifikation für die Plausibilität (plausibility) alle Massewerte, welche die Label im jeweiligen Set enthalten, zusammengezogen. Für n=3 und Label A werden also Massen von {A}, {A,B}, {A,C} und {A,B,C} etc. zusammengezogen, für den Glaube (Belief) werden nur die Massen aller kleineren Sets zusammengezogen, d.h. für A nur {A}, für {A,B} {A}, {B} und {A,B} etc.).

In anderen Worten werden in Verfahrensschritt 12 für ein Klassifikationsproblem mit n Klassen 2^n Massewerte erstellt, wobei das Label als Massevektor aufgefasst wird. Die Masse wird dabei so verteilt, dass bei eindeutiger Identifikation des Labels das Set mit nur einem Element der entsprechenden Klasse 100% der Masse erhält, während bei einem unsicheren Label die entsprechend größeren Sets die Masse erhalten ("könnte A oder B sein" -> {A, B} Set erhält gesamte Masse). In letzterem Fall können Tendenzen ebenfalls erfasst werden, und zwar als Masse auf kleineren Sets ("tendiere A, könnte aber auch B sein" -> {A} 50% Masse, {A, B} 50% Masse). Die Masse wird dann über das größte Set aller angegebenen Möglichkeiten sowie den darin enthaltenen angegebenen Tendenzen gleichverteilt.

Dabei können die Label bzw. Labelvektoren auf unterschiedliche Weisen erhalten werden. So können diese durch ein System mit künstlicher Intelligenz (Kl), beispielsweise basierend auf einem tiefen neuronalen Netzwerk, geschätzt werden Ebenso können die Label aber auch durch einen Menschen erstellt werden, beispielsweise indem Nutzer der Fahrzeuge, welche die Umfelddaten erfassen, gefragt werden. Schließlich ist es auch möglich, beides zu kombinieren, d.h. für die gleichen Umfelddaten sowohl durch einen Nutzer als auch ein System mit künstlicher Intelligenz Label generieren zu lassen.

In Verfahrensschritt 13 werden die so erhaltenen Labelvektoren mit dem jeweiligen Zeit- und/oder Ortstempel an einen Datenaggregator im Backend, im Folgenden auch kurz als Backendserver bezeichnet, gesendet. Es werden dann für die übermittelten Labelvektoren alle möglichen Klassen aus allen Antworten zu allen Datenpunkten herausgesucht, das Powerset wird als Frame of Discernment angenommen. Dabei können optional bestimmte Klassen zusammengefasst werden, wenn diese die gleiche Information beschreiben und verschiedene Nutzer für die erfassten Umfelddaten andere Worte zur Beschreibung genutzt haben. So kann beispielsweise für ein autonomes Fahrsystem eine Klasse "Regen" und eine Klasse "nass" für das das Wetter die gleiche Information widerspiegeln.

In einer alternativen Ausführungsform können die erfassten Umfelddaten aber auch ohne Label bzw. Labelvektoren, aber mit Zeit- und/oder Ortstempel, an den Backendserver gesendet werden und erst dort offline mit Label bzw. Labelvektoren versehen werden. Dieses erfolgt dann wie oben beschrieben und kann wiederum manuell durch einen Nutzer und/oder ein System mit künstlicher Intelligenz erfolgen. Auf diese Weise kann auch bei aufwendigen Auswertungen der Umfelddaten und nur begrenzt im Fahrzeug zur Verfügung stehender Rechenleistung eine verlässliche Schätzung der Label und ihrer Unsicherheiten vorgenommen werden.

In Verfahrensschritt 14 werden dann die übermittelten Labelvektoren für einen Datenpunkt jeweils zu einem aggregierten Labelvektor zusammengeführt. Dieses erfolgt durch Linearkombination der übermittelten Labelvektoren. Hierbei können die Massevektoren zeitlich und/oder räumlich naheliegender Observationen der Umfelddaten durch mehrere Fahrzeuge der Fahrzeugflotte unterschiedlich gewichtet werden, wobei die Gewichte aller Observationen dabei zu 1 normalisiert werden. Insbesondere kann die Gewichtungsfunktion dabei mit zunehmendem räumlichen und/oder zeitlichen Abstand abnehmen. Hierbei kann auch vorgesehen werden, dass der Nutzer die Gewichtungsfunktion und insbesondere das Maß der Abnahme mit zunehmendem Abstand definieren kann. Dieses ermöglicht, wie in Verfahrensschritt 11 angedeutet, eine Anpassung je nach erfassten Umfeldobjekten bzw. Umfeldparametern.

Die so erhaltenen aggregierten Labelvektoren werden dann in Verfahrensschritt 15 zusammen mit dem Datenpunkt in einer Datenbank hinterlegt. Dabei kann bei einer ersten Ausführungsform der gesamte 2^n dimensionale Massevektor als Label gespeichert werden. Dies gibt maximale Flexibilität für die Nutzung der enthaltenen Unsicherheit, kann aber für Klassifizierungsprobleme mit vielen Klassen wegen der exponentiellen Zunahme der Größe des Labels mit der Anzahl der Klassen schnell unhandlich werden.

Ebenso können aber auch aus den Wahrscheinlichkeitsmassen des jeweils aggregierten Labelvektors für die n Elemente mit nur einer Klasse n Plausibilitätswerte und n Glaubenswerte ermittelt werden und dann als jeweils n-dimensionale Vektoren in der Datenbank gespeichert werden. Dieses hat den Vorteil, dass aufgrund des deutlich kleineren Formats weniger Speicherplatz benötigt wird, wobei dann aber die enthaltene Unsicherheitsinformation auf die jeweilige Unter- und Obergrenze der Wahrscheinlichkeit reduziert wird.

Auf diese Weise liegt dann ein Trainingsdatensatz vor, bei dem die Label jeweils mit zugeordneten Unsicherheitswerten vorliegen, so dass diese Unsicherheit bei dem Training des Maschinenlernmodells mitberücksichtigt werden kann. Dieses Training erfolgt in einem Verfahrensschritt 16 typischerweise auf dem Backendserver oder einem anderen mit dem Backendserver verbundenen Server, welcher ausreichende Ressourcen aufweist, um großen Datenmengen von einem akkumulierten Datensatz beim Training zu verarbeiten. Das Maschinenlernmodell kann dabei insbesondere trainiert werden, um zu lernen, verschiedene visuelle Elemente wie Objekte, Personen und Szenen zu erkennen und zu klassifizieren. Ein so trainiertes Maschinenlernmodell kann dann bei Verwendung in einem autonomen Fahrsystem auch bei unsicheren Vorhersagen genauere Vorhersagen treffen, basierend darauf angemessener reagieren und so zu einer Erhöhung der Fahrsicherheit beitragen.

Das erfindungsgemäße Verfahren kann beispielsweise als Computerprogramm ausgeführt werden, wobei ein Teil der Schritte in einer Online-Phase jeweils durch Fahrzeuge einer Fahrzeugflotte, beispielsweise auf einem Steuergerät des Fahrzeugs, ausgeführt werden und weitere Schritte in einer Offline-Phase durch einen Server ausgeführt werden.

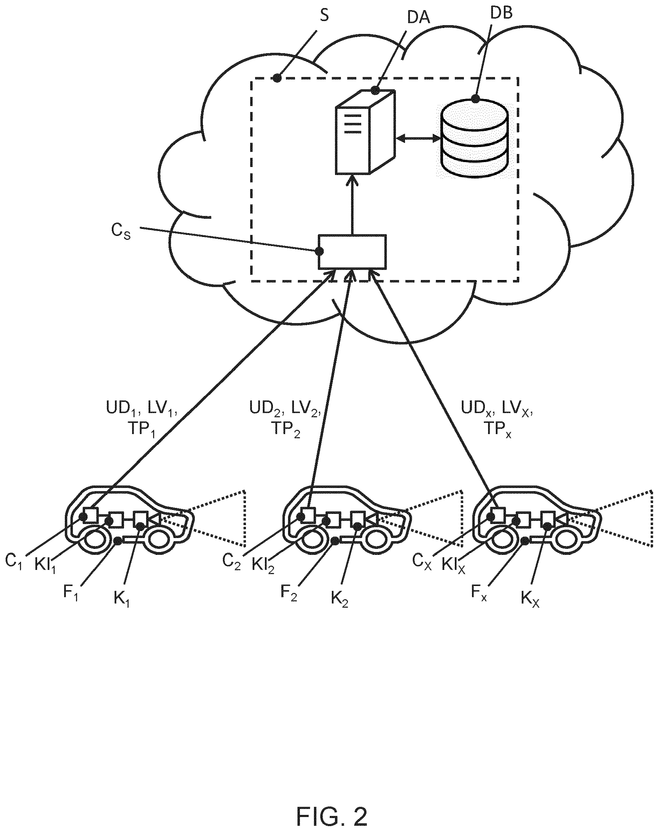

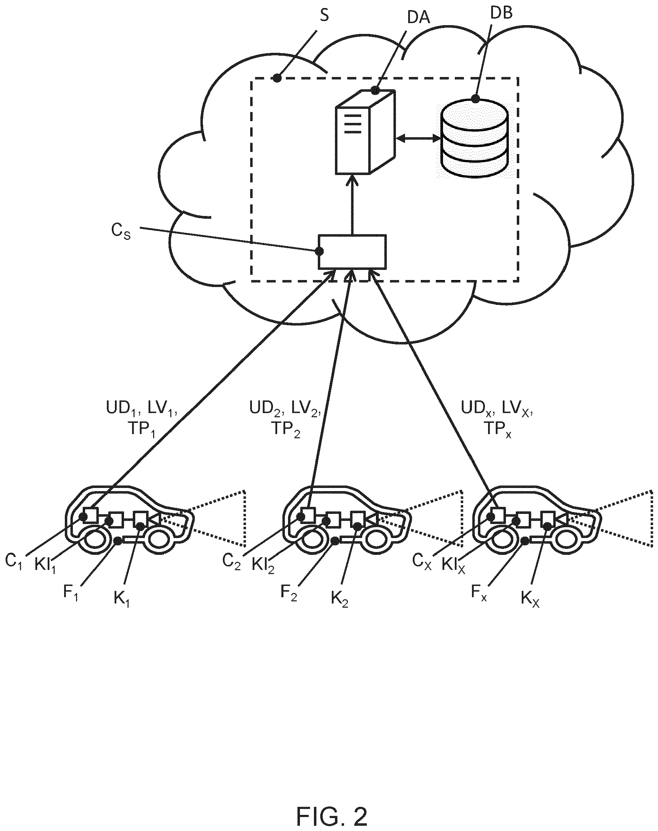

Figur 2 zeigt schematisch ein Beispiel mit mehreren Fahrzeugen F, bis Fx, welche Teil einer Fahrzeugflotte sind und den gleichen begrenzten geografischen Bereich befahren. Durch die Fahrzeuge werden zur Generierung eines gelabelten Datensatzes Umfelddaten erfasst und an eine Servereinrichtung S übertragen. Dieses kann als Reaktion auf eine Aufforderung von der Servereinrichtung S erfolgen, welche beispielsweise aufgrund einer ungenügenden Datenqualität der dort bisher vorliegenden Trainingsdaten für das Maschinenlernmodell an die Fahrzeuge übermittelt worden ist.

Der zentrale Server kann als Backend-Server für die Fahrzeugflotte im Internet bereitgestellt sein und Teil einer hier nicht weiter beschriebenen IT-Infrastruktur sein. Die Kommunikation zwischen dem jeweiligen Fahrzeug und dem Server erfolgt hierbei über eine drahtlose Datenfunkverbindung, beispielsweise mittels in den Fahrzeugen vorgesehenen Mobilfunkeinheiten.

Die Fahrzeuge F₁ bis F_{X} weisen verschiedene Komponenten auf. So sind in den Fahrzeugen insbesondere Sensoren zur Erfassung des Fahrzeugumfelds vorgesehen, mit denen jeweils Umfelddaten UD₁, UD₂, UD_{X} zum aktuellen Fahrzeugumfeld erfasst werden. In dem dargestellten Beispiel weisen die Flottenfahrzeuge jeweils eine Außenkamera K₁ bis Kx zur optischen Erfassung der Umfelddaten auf, mit denen Umfeldobjekte erfasst werden können. Stattdessen oder zusätzlich kann das Fahrzeugumfeld aber auch mit anderen Sensoren erfasst werden, zum Beispiel mit einem Radarsensor, einem LIDAR-Sensor oder einem Ultraschallsensor. Die Erfassung des Fahrzeugumfelds ist hierbei nicht auf die Erfassung von gegenständlichen Umfeldobjekten beschränkt, sondern kann ebenso weitere Umfeldparameter, wie beispielsweise Wetterbedingungen, Verkehrsverhältnisse oder Lichtverhältnisse umfassen. Diese können direkt durch hierfür geeignete Sensoren erfasst werden oder auch durch Erfassung von Zustandsänderungen des Fahrzeugs.

Bei der Erfassung der Umfelddaten wird durch weitere Komponenten, die der Übersichtlichkeit halber nicht dargestellt sind, jeweils auch die aktuelle Zeit und/oder Position des Fahrzeugs ermittelt und daraus Daten mit Zeit- und/oder PositionsangabenTP, bis TP_{X} erzeugt.

Die von einer der Außenkameras K₁ bis K_{X} erfassten Umfelddaten werden einem KI-Modul KI₁ bis KI_{X} in dem jeweiligen Fahrzeug zugeführt. Das KI-Modul erzeugt dann, wie oben beschrieben, für Datenpunkte in den jeweils erfassten Umfelddaten Labelvektoren LV, bis LVx. Die Umsetzung des KI-Moduls kann beispielsweise auf einem zentralen Steuergerät des Fahrzeugs erfolgen, welches hierfür ausreichende Rechenkapazitäten aufweist. Hierbei kann das KI-Modul eigens für diesen Zweck in dem Fahrzeug implementiert sein. Alternativ kann ein bereits ohnehin für anderere Zwecke im Fahrzeug vorhandenes KI-Modul verwendet werden.

Weiterhin ist in jedem Fahrzeug eine Kommunikationseinheit C, bis Cx vorgesehen, mittels der die aktuell erfassten Datenpunkte der Umfelddaten, die zugeordneten Zeit- und/oder Positionsangaben und die erzeugten Labelvektoren für die erfassten Datenpunkte an die Servereinrichtung S übermittelt werden.

Die Servereinrichtung S weist eine Empfangseinheit es auf, mit der die übermittelten Daten empfangen werden. Von der Empfangseinheit es werden die empfangenen Daten einem Datenaggregator DA zugeführt, in dem die übermittelten Labelvektoren mit geeigneten Algorithmen zu aggregierten Labelvektoren zusammengefasst werden. Die aggregierten Labelvektoren und/oder von den aggregierten Labelvektoren abgeleitete Informationen werden dann zusammen mit den zugehörigen Datenpunkten in einer Datenbank DB gespeichert, die bei dem Backend-Server verortet sein kann. Auf diese Weise kann beispielsweise für ein Umfeldmodell eines Maschinenlernmodells in der Datenbank DB ein gelabelter Datensatz generiert, ergänzt oder aktualisiert werden.

### Bezugszeichenliste

- 10 - 16: Verfahrensschritte
- F₁, F₂, F_{X}: Fahrzeug
- K₁, K₂, K_{X}: Kamera
- C₁, C₂, C_{X}: Kommunikationseinheit
- KI₁, KI₂, KI_{X}: KI-System
- UD₁, UD₂, UDₓ: Umfelddaten
- LV₁, LV₂, LVₓ: Labelvektoren
- TP₁, TP₂, TPₓ: Zeit- und/oder Positionsdaten
- es: Kommunikationseinheit
- S: Server
- DA: Datenaggregator
- DB: Datenbank

## Patentansprüche

1. Verfahren zur Generierung eines gelabelten Datensatzes für ein Umfeldmodell, bei dem die folgenden Schritte ausgeführt werden:
- Erfassen (11) von Umfelddaten durch mehrere Fahrzeuge (F₁, F₂, Fₓ) einer Fahrzeugflotte, wobei die Umfelddaten (UD₁, UD₂, UDₓ) durch Sensoren (K₁, K₂, K_{X}) der jeweiligen Fahrzeuge erfasst werden und Umfeldobjekte und/oder Umfeldparameter im Fahrzeugumfeld der jeweiligen Fahrzeuge betreffen;
- Erzeugen (12) von Labelvektoren (LV₁, LV₂, LVₓ) zu Datenpunkten in den jeweils erfassten Umfelddaten (UD₁, UD₂, UDₓ), wobei ein Labelvektor für eine Klassifikation der Datenpunkte in n verschiedene Klassen einen Satz von 2^n möglichen Elementen aufweist, die sich aus den möglichen Kombinationen der Klassen ergeben, und wobei ein erfasster Datenpunkt mit einem Unsicherheitsmaß versehen wird, indem einem oder mehreren der möglichen Elemente Werte für Wahrscheinlichkeitsmassen zugeordnet werden;
- Zusammenführen (14) der Labelvektoren (LV₁, LV₂, LVₓ) zu einem aggregierten Labelvektor für einen Datenpunkt durch Linearkombination der übermittelten Labelvektoren; und
- Speichern (15) des aggregierten Labelvektors oder einer von dem aggregierten Labelvektor abgeleiteten Information zusammen mit dem zugehörigen Datenpunkt in einer Datenbank (DB).

2. Verfahren nach Anspruch 1, wobei das Umfeldmodell für eine Abbildung der Fahrzeugumgebung durch ein Wahrnehmungsmodul eines autonomen Fahrsystems verwendbar ist, wobei das Wahrnehmungsmodul auf einem Maschinenlernmodell basiert und wobei das Maschinenlernmodell mittels des in der Datenbank (DB) gespeicherten gelabelten Datensatzes trainiert (16) wird.

3. Verfahren nach Anspruch 1 oder 2, wobei bei der Erfassung der Umfelddaten auch eine Zeit- und/oder Positionsangabe (TP_{1,} TP₂, TPₓ) zu den jeweils erfassten Datenpunkten bestimmt wird.

4. Verfahren nach einem der Ansprüche 1 bis 3, wobei die einzelnen Labelvektoren (LV₁, LV₂, LVₓ) zu den jeweils erfassten Datenpunkten in dem jeweiligen Fahrzeug (F₁, F₂, Fx) erzeugt werden und die erfassten Datenpunkte, die erzeugten Labelvektoren für die erfassten Datenpunkte sowie die zugeordneten Zeit- und/oder Positionsangaben an einen Datenaggregator (DA) übermittelt (13) werden.

5. Verfahren nach einem der Ansprüche 1 bis 3, wobei die erfassten Datenpunkte sowie die zugeordneten Zeit- und/oder Positionsangaben an einen Datenaggregator (DA) übermittelt (13) werden und dort die einzelnen Labelvektoren (LV₁, LV₂, LVₓ) zu den jeweils erfassten Datenpunkten erzeugt (12) werden.

6. Verfahren nach einem der Ansprüche 4 oder 5, wobei der Datenaggregator (DA) in einem Backendserver (S) verortet ist.

7. Verfahren nach einem der vorhergehenden Ansprüche, wobei für den Fall, dass zur Beschreibung der Umfelddaten für gleiche Merkmale und/oder Eigenschaften unterschiedliche Klassen verwendet worden sind, eine Zusammenfassung dieser Klassen erfolgt.

8. Verfahren nach einem der vorhergehenden Ansprüche, wobei der aggregierte Labelvektor in der Datenbank (DB) als 2^n dimensionaler Massevektor gespeichert wird.

9. Verfahren nach einem der Ansprüche 1 bis 7, wobei aus den Wahrscheinlichkeitsmassen des aggregierten Labelvektors für die n Elemente mit nur einer Klasse n Plausibilitätswerte und n Glaubenswerte ermittelt werden und dann als jeweils n-dimensionale Vektoren in der Datenbank (DB) gespeichert werden.

10. Verfahren nach Anspruch 9, wobei für eine Kontrolle der Unter- und/oder Obergrenzen der Wahrscheinlichkeiten einzelner Klassen ein Vergleich mit einem Schwellwert für die Plausibilitätswerte und/oder einem Schwellwert für die Glaubenswerte erfolgt.

11. Verfahren nach einem der vorhergehenden Ansprüche, wobei bei dem Zusammenführen (14) der übermittelten Labelvektoren zu einem aggregierten Labelvektor die einzelnen Labelvektoren (LV₁, LV₂, LVₓ) unterschiedlich gewichtet werden.

12. Verfahren nach Anspruch 11, wobei die Gewichtung der einzelnen Labelvektoren (LV₁, LV₂, LVₓ) basierend auf den übermittelten Zeit- und/oder Positionsangaben erfolgt.

13. Verfahren nach Anspruch 12, wobei die einzelnen Labelvektoren (LV₁, LV₂, LVₓ) mit zunehmendem zeitlichen und/oder räumlichen Abstand geringer gewichtet werden.

14. Verfahren nach einem der Ansprüche 11 bis 13, wobei in Abhängigkeit von den erfassten Umfeldobjekten und/oder Umfeldparametern unterschiedliche Gewichtungsfunktionen vorgegeben werden.

15. Verfahren nach einem der vorhergehenden Ansprüche, wobei bei dem Zusammenführen (14) der Labelvektoren zu einem aggregierten Labelvektor zeitlich naheliegende Labelvektoren zwingend mit einbezogen werden.
